# EUROPÄISCHE PATENTSCHRIFT

(11) **EP 4 173 812 B1**
(45) Veröffentlichungstag und Bekanntmachung des Hinweises auf die Patenterteilung: **28.08.2024**
(21) Anmeldenummer: 22201797.2
(22) Anmeldetag: 17.10.2022
(51) Int. Cl.: B29D 30/38

(54) **VERFAHREN UND VORRICHTUNG ZUR HERSTELLUNG EINER SPULBANDAGE EINES FAHRZEUGREIFENS**
METHOD AND DEVICE FOR PRODUCING A WINDING STRIP OF A VEHICLE TYRE
PROCÉDÉ ET DISPOSITIF DE FABRICATION D'UN BANDAGE DE BOBINE D'UN PNEU DE VÉHICULE

(30) Priorität: 01.11.2021 DE 102021212283
(43) Veröffentlichungstag der Anmeldung: 03.05.2023
(73) Patentinhaber: Continental Reifen Deutschland GmbH, 30175 Hannover (DE)
(72) Erfinder: Rohleder, Martin, 30165 Hannover (DE); Vienenkötter, Lars, 30165 Hannover (DE); Glinz, Michael, 30165 Hannover (DE)
(74) Vertreter: Continental Corporation

(56) Entgegenhaltungen:
- EP-A2- 1 022 119
- EP-B1- 2 135 727
- US-A1- 2021 053 307

## Beschreibung

Die Erfindung betrifft ein Verfahren zur Herstellung einer Spulbandage eines Fahrzeugreifens sowie eine zur Ausführung dieses Verfahrens bestimmte Vorrichtung.

Moderne Fahrzeugreifen umfassen einen zwischen den Reifengürteln und dem sog. Laufstreifen (der äußersten Gummilage, in die das Profil eingebracht ist) positionierten textilverstärkten Gummistreifen, die sog. Spulbandage. Diese dient insbesondere dazu, die Umfangsausdehnung zu verringern und die Hochgeschwindigkeitsstabilität bei Benutzung des Reifens zu erhöhen.

Ein Verfahren zur Herstellung einer Spulbandage eines Fahrzeugreifens, bei dem eine Gruppe von Einzelfäden gemeinsam jeweils von einer gebremsten Einzelfadenspule in eine Fadenführung, in der die Einzelfäden mit vorbestimmtem Abstand parallel ausgerichtet werden, in einen Extrusionskanal eines Extruders abgewickelt und in diesem gemeinsam mit einer Gummierung versehen wird, sowie entsprechende Anlagen sind seit Längerem bekannt und im industriellen Einsatz. Sie werden als Cap Strip Line bezeichnet und umfassen neben den genannten Komponenten auch eine Kühlstufe mit mehreren wassergekühlten Kühltrommeln und eine Mehrzahl von Aufwickeltrommeln zur Aufwicklung und Zwischenspeicherung der fertigen Spulbandage. Im industriellen Einsatz wird in einer solchen Anlage eine größere Anzahl von Spulbandagen (beispielsweise 16) parallel hergestellt, so dass die Anlage auch eine entsprechende Anzahl von Einzelfadenspulen-Gruppen, Fadenführungen und Extruderkanälen sowie Aufwickeltrommeln umfasst.

Die zur Herstellung der Spulbandage eingesetzten Textilfäden können reißen, und ein solcher Riss (Fadenbruch) hat natürlich erhebliche Störungen im Produktionsablauf zur Folge. Er muss daher frühzeitig erkannt werden, um die Störung möglichst schnell und unaufwändig beheben zu können.

Da bei einem Fadenbruch die betroffene Einzelfadenspule aufgrund der fehlenden Zugspannung und des fortwirkenden Bremsmomentes in Gegenrichtung zu drehen beginnt, ist es relativ leicht, einen bereits gerissenen Faden zu erkennen. Diese Möglichkeit wird auch in der Praxis genutzt.

Es besteht jedoch das Anliegen, bereits einen bevorstehenden Fadenbruch erkennen und ggf. geeignete Steuerungsmaßnehmen im Anlagenbetrieb einleiten zu können. Der Erfindung liegt daher die Aufgabe zu Grunde, ein entsprechendes verbessertes Verfahren und eine verbesserte Vorrichtung anzugeben.

Die EP 1 022 119 A2 der Anmelderin, die sich gleichfalls mit einem Verfahren und einer Vorrichtung zur Herstellung einer Gürtelbandage eines Fahrzeugluftreifens befasst, lehrt, bei der Aufwicklung der Spulbandage auf die Gürtellagen des Reifens eine Geschwindigkeitsüberwachung an verschiedenen rotierenden Teilen der Anlage und eine Nutzung der Geschwindigkeitssignale zum Aufbau der Gürtelbandage vorzunehmen.

Aus EP 2 135 727 B1 ist es, aus einem anderen technischen Gebiet, bekannt, bei der industriellen Verarbeitung von Fäden eine Fadenbruch-Vorhersage aufgrund von Messungen der Fadenspannung an verschiedenen Punkten einer entsprechenden Anlage und einer vergleichenden Auswertung der Fadenspannungen auszuführen.

Die o. g. Aufgabe wird in ihrem Verfahrensaspekt durch ein Verfahren mit den Merkmalen des Anspruchs 1 und ihrem Vorrichtungsaspekt durch eine Vorrichtung mit den Merkmalen des Anspruchs 7 gelöst. Zweckmäßige Fortbildungen des Erfindungsgedankens sind Gegenstand der jeweiligen abhängigen Ansprüche.

Die Erfindung geht von dem Gedanken aus, die relativ hohe Bruchdehnung der eingesetzten Textilfäden zum Zwecke der gewünschten Bruch-Vorhersage zu nutzen. Sie schließt weiter den Gedanken ein, hierzu die Drehzahl oder Umfangsgeschwindigkeit der Einzelfadenspulen kontinuierlich (oder jedenfalls in sehr kurzen Zeitabständen periodisch) zu überwachen und Unregelmäßigkeiten in einer Weise auszuwerten, die eine verlässliche Information über eine Dehnung ermöglicht, deren Ausmaß einen bevorstehenden Fadenbruch signalisiert.

Gemäß diesem Konzept wird die Drehzahl oder Umfangsgeschwindigkeit jeder Einzelfadenspule im Wesentlichen kontinuierlich zeitlich erfasst und einer Auswertung unterzogen, die insbesondere eine Schwellwertdiskriminierung mit einem vorbestimmten Schwellwert und/oder eine Schwingungsanalyse der Kurve der Zeitabhängigkeit umfasst. Aus dem Auswertungsergebnis wird dann eine Information über eine Dehnung oder Verklemmung eines Einzelfadens und/oder eine Störung am Extruder und eine Warnung vor einem bevorstehenden Bruch eines Einzelfadens abgeleitet.

In einer Ausführung des Verfahrens wird die Kurve der Zeitabhängigkeit der Drehzahl oder Umfangsgeschwindigkeit einer Glättung unterzogen und eine geglättete Zeitverlaufs-Kurve gebildet und eine oberhalb eines vorbestimmten Abweichungs-Schwellwertes liegende Abweichung von der geglätteten Zeitverlaufs-Kurve als die Information über eine Dehnung oder Verklemmung des von der betroffenen Einzelfadenspule abgewickelten Einzelfadens gewertet.

Gemäß einer weiteren Ausführung, die aber ggfs. mit der erstgenannten kombiniert werden kann, wird die einen positiven Anstiegs-Gradienten aufweisende Kurve der Zeitabhängigkeit der Drehzahl einer Glättung unterzogen und eine über einem vorbestimmten Schwellwert liegende Veränderung des Anstiegs-Gradienten, insbesondere Vorzeichenumkehr des Anstiegs-Gradienten, als Information über die Dehnung oder Verklemmung des von der betroffenen Einzelfadenspule abgewickelten Einzelfadens gewertet.

In einer weiteren möglichen Ausführung wird die Zeitabhängigkeiten der Drehzahl oder Umfangsgeschwindigkeit aller Einzelfadenspulen der Gruppe im Wesentlichen kontinuierlich miteinander verglichen und das Auftreten einer einen vorbestimmten Schwellwert übersteigenden Abweichung des Zeitverlaufes bei einer Einzelfadenspule gegenüber anderen als Information über eine Dehnung oder Verklemmung des von dieser abgewickelten Einzelfadens gewertet. Als Schwellwert kann hierbei beispielsweise ein Prozentwert (z. B. 10%) dienen, um den die Drehzahl einer Einzelfadenspule von der Streuung/Standardabweichung der Drehzahlen der anderen Spulen abweichen darf.

Eine weitere Ausführung ergibt sich für die industriell üblichen Anlagen, bei denen eine Mehrzahl von Gruppen von Einzelfäden, insbesondere über ein und dieselbe angetriebene Trommel, jeweils in einen Extruderkanal des Extruders abgewickelt wird. Hierbei werden die Zeitabhängigkeiten der Drehzahl oder Umfangsgeschwindigkeit der Einzelfadenspulen gruppenweise miteinander verglichen und das Auftreten einer einen vorbestimmten Schwellwert übersteigenden Abweichung bei sämtlichen Einzelfadenspulen einer Gruppe gegenüber den Einzelfadenspulen der anderen Gruppen als Information über eine Verstopfung des Extruderkanals gewertet.

In einer ersten sinnvollen Nutzung der Erfindung wird bei Vorliegen der Information über eine Dehnung oder Verklemmung oder Störung am Extruder ein akustisches und/oder optisches, insbesondere der betroffenen Einzelfadenspule oder dem betroffenen Extruderkanal zugeordnetes, Warnsignal erzeugt.

Zusätzlich oder alternativ hierzu wird bei Vorliegen der Information über eine Dehnung ein Steuersignal zum Eingriff in die Fadenabwicklung, insbesondere zur Verringerung des auf die betroffene Einzelfadenspule ausgeübten Bremsmomentes, erzeugt.

Gemäß den weiter oben erläuterten Verfahrensmerkmalen weist eine Vorrichtung zur Durchführung des vorgeschlagenen Verfahrens Folgendes auf:
- mindestens eine Gruppe von Einzelfadenspulen, von denen jede einen Textil-Einzelfaden gespeichert hält und denen jeweils eine Bremseinrichtung zugeordnet ist,
- eine Fadenführung zur Parallel-Ausrichtung der Einzelfäden der Gruppe in vorbestimmtem Abstand zueinander,
- einen stromabwärts der Fadenführung angeordneten Extruder mit mindestens einem Extruderkanal, in den die Einzelfäden der Gruppe einlaufen und in dem sie gemeinsam gummiert werden, und
- eine angetriebene Trommel zum Abwickeln der Einzelfäden von den Einzelfadenspulen durch die Fadenführung und den zugeordneten Kanal des Extruders,
wobei
- jeder Einzelfadenspule eine Erfassungseinrichtung zur im Wesentlichen kontinuierlichen zeitlichen Erfassung der Drehzahl oder Umfangsgeschwindigkeit zugeordnet ist,
- eine Vorverarbeitungseinrichtung zur Vorverarbeitung der Ausgangsdaten der Erfassungseinrichtungen und zur Synthese einer Kurve der Zeitabhängigkeit der Drehzahl oder Umfangsgeschwindigkeit und, der Vorverarbeitungseinrichtung nachgeordnet,
- eine Auswertungseinrichtung zur Auswertung der Kurve der Zeitabhängigkeit für jede Einzelfadenspule zur Gewinnung der Information über eine Dehnung oder Verklemmung oder Störung am Extruder vorgesehen ist.

Hierbei enthält, in einer aus derzeitiger Sicht bevorzugten Ausführung, die Auswertungseinrichtung einen Schwellwertspeicher zur Speicherung eines bei der Auswertung der Kurve der Zeitabhängigkeit zu Grunde zu legenden Schwellwertes.

In weiteren Ausführungen weist die Auswertungseinrichtung eine Glättungseinrichtung zur Glättung der Kurve der Zeitabhängigkeit nach einem vorgespeicherten Glättungsalgorithmus und/oder eine Mittelungseinrichtung zur Ableitung einer laufend gemittelten Zeitverlaufs-Kurve auf.

In einer weiteren Ausführung der Vorrichtung ist die Auswertungseinrichtung zur Schwellwertdiskriminierung der geglätteten Kurve der Zeitabhängigkeit oder der Mittelwert-Kurve anhand des vorbestimmten Schwellwertes dahingehend ausgeführt, dass bei einer den Schwellwert überschreitenden Abweichung in der geglätteten Zeitverlaufs-Kurve oder Mittelwert-Kurve ein die Dehnung oder Verklemmung anzeigendes Signal ausgegeben wird.

In einer weiteren Ausführung ist den den Einzelfadenspulen der Gruppe zugeordneten Erfassungseinrichtungen und Vorverarbeitungseinrichtungen und jeweils nachgeordneten Glättungs- bzw. Mittelungseinrichtungen der Auswertungseinrichtung eine gemeinsame Vergleichereinheit nachgeschaltet. Diese ist eingangsseitig mit dem Schwellwertspeicher verbunden und zu einem Vergleich aller geglätteten Zeitabhängigkeiten oder Mittelwert-Kurven der Einzelfadenspulen und zur Diskriminierung des Vergleichsergebnisses mit dem Schwellenwert und zur Ausgabe eines eine Dehnung oder Verklemmung eines Einzelfadens kennzeichnenden Signals ausgebildet, wenn beim Vergleich eine den Schwellwert übersteigende Abweichung bei einer Einzelfadenspule auftritt.

Sofern, wie in der industriellen Praxis üblich, die Anlage eine Mehrzahl von Gruppen von Einzelfadenspulen mit jeweils gruppenweise zugeordneter Fadenführung und Extruderkanal, umfasst, ist eine weitere Ausführung sinnvoll. Bei dieser umfasst die Auswertungseinrichtung eine der Mehrzahl von Gruppen entsprechende Mehrzahl von Kanälen, in denen jeweils eine Glättungseinrichtung oder Mittelungseinrichtung vorgesehen ist. Der Mehrzahl von Kanälen ist eine Vergleichereinrichtung zugeordnet, welche eingangsseitig mit dem Schwellwertspeicher verbunden und dazu ausgebildet ist, die geglätteten Zeitverlaufs-Kurven oder Mittelwert-Kurven der Einzelfadenspulen gruppenweise miteinander zu vergleichen und bei einer den Schwellwert übersteigenden Abweichung zwischen den Zeitverläufen einzelner Gruppen ein eine Verstopfung eines Extruderkanals anzeigendes Signal auszugeben.

In einer weiteren Ausführung ist der Auswertungseinrichtung eine Alarmausgabeeinrichtung zur Ausgabe eines akustischen und/oder optischen Warnsignals, insbesondere in Zuordnung zu einer betroffenen Einzelfadenspule oder einem Extruderkanal, nachgeschaltet.

Alternativ hierzu oder zusätzlich ist der Auswertungseinrichtung eine Steuersignal-Erzeugungseinrichtung zur Erzeugung eines Steuersignals zum Eingriff in den Abwicklungsvorgang, insbesondere zur Zuführung zu einer Bremseinrichtung einer Einzelfadenspule, nachgeordnet.

Vorteile und Zweckmäßigkeiten der Erfindung ergeben sich im Übrigen aus der nachfolgenden Beschreibung von Ausführungsbeispielen und -aspekten anhand der Figuren. Von diesen zeigen:
- Fig. 1: eine Prinzipskizze zur Erläuterung der Erfindung,
- Fig. 2: eine beispielhafte grafische Darstellung zur Erläuterung einer Auswertungsoption und
- Fig. 3: eine schematische Darstellung einer Ausführungsform der erfindungsgemäßen Vorrichtung.

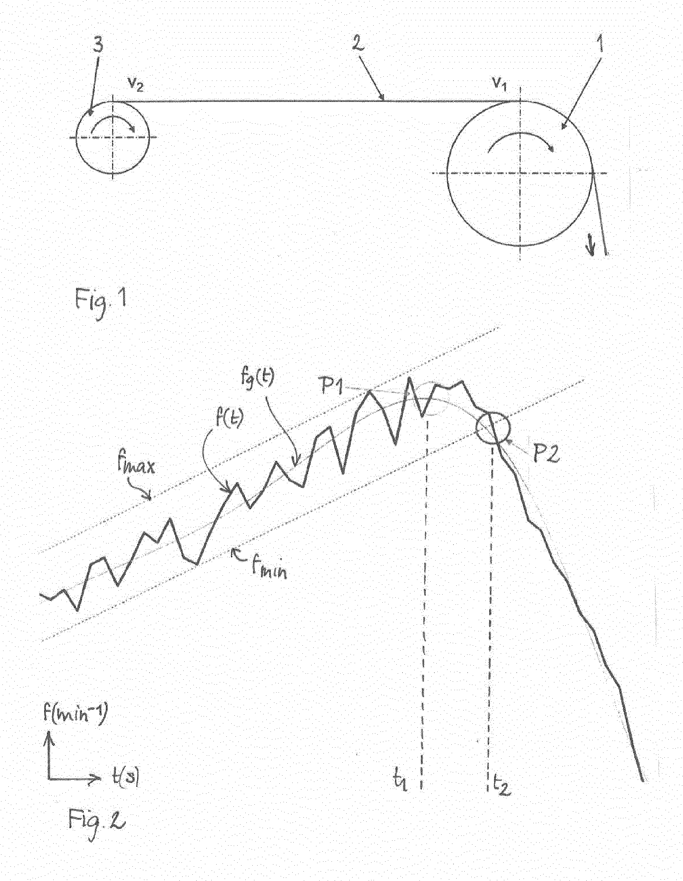

Fig. 1 zeigt als Prinzipskizze eines grundlegenden Gedanken der Erfindung: Eine angetriebene Trommel 1 einer Anlage, in der ein Textilfaden 2 von einer Vorratsspule 3 abgewickelt wird, rotiert mit einer vorbestimmten Umfangsgeschwindigkeit v₁. Im Normalbetrieb der Anlage, solange der Textilfaden 2 keiner Dehnung unterliegt, ist die Umfangsgeschwindigkeit v₂ am Umfang der Vorratsspule 3 gleich der Trommel-Geschwindigkeit v₁. Tritt aber eine Dehnung des Textilfadens auf, verringert sich die Geschwindigkeit v₂, so dass dann gilt: v₁ > v₂. Dies gilt insbesondere dann, wenn - wie bei Anlagen zur Spulbandagenherstellung üblich - eine aktive Bremseinrichtung auf die Vorratsspule 3 einwirkt. Eine ähnliche Situation tritt im Übrigen auf, wenn der Textilfaden 2 an irgendeinem (in der Figur nicht gezeigten) Hindernis zwischen der Vorratsspule 3 und der Trommel 1 klemmt.

In Fig. 2 ist an einer beispielhaften Kurve der Zeitabhängigkeit der Drehzahl f der Vorratsspule 3 gezeigt, wie aus der Überwachung des Drehzahlverlaufes eine Information über eine (unzulässige) Fadendehnung gewonnen werden kann. Aufgrund der abnehmenden Fadenmenge auf der Vorratsspule 3 steigt bei gleichbleibender Transportgeschwindigkeit des Textilfadens (vorgegeben durch die Umfangsgeschwindigkeit v₁ der Trommel 1 gemäß Fig. 1) die Drehzahl f weitgehend linear an. Sie ist aufgrund von Schwingungen in der Halterung der Vorratsspule und aufgrund zusätzlicher Bewegungskomponenten jedoch von "Schwingungen" (jitter) überlagert. Dies ist für die Ableitung eines gültigen Signals, das eine unzulässige Fadendehnung kennzeichnet, zu beachten.

Daher wird in einer Ausführung der Erfindung aus der tatsächlichen Zeitabhängigkeits-Kurve f(t) eine geglättete Zeitverlaufs-Kurve f_{g}(t) errechnet. Auch diese Kurve hat im regulären Betrieb einen positiven Anstiegs-Gradienten. Zusätzlich oder alternativ zur Bestimmung der geglätteten Zeitverlaufs-Kurve f_{g}(t) kann ein Toleranzbereich zwischen einer unteren "normalen" Drehzahl fₘᵢₙ und einer oberen "normalen" Drehzahl fₘₐₓ definiert werden.

Als Anzeichen für eine unzulässige Dehnung des Fadens kann eine Umkehr des Drehzahl-Gradienten (P1) oder ein Verlassen des definierten Toleranzbereiches (Punkt P2) gewertet werden. Zum entsprechenden Zeitpunkt t₁ oder t₂, und jedenfalls lange vor dem tatsächlichen Fadenbruch, ist also eine relevante Information zur Auslösung eines Alarms und/oder eines Steuerungseingriffs in die Anlage verfügbar.

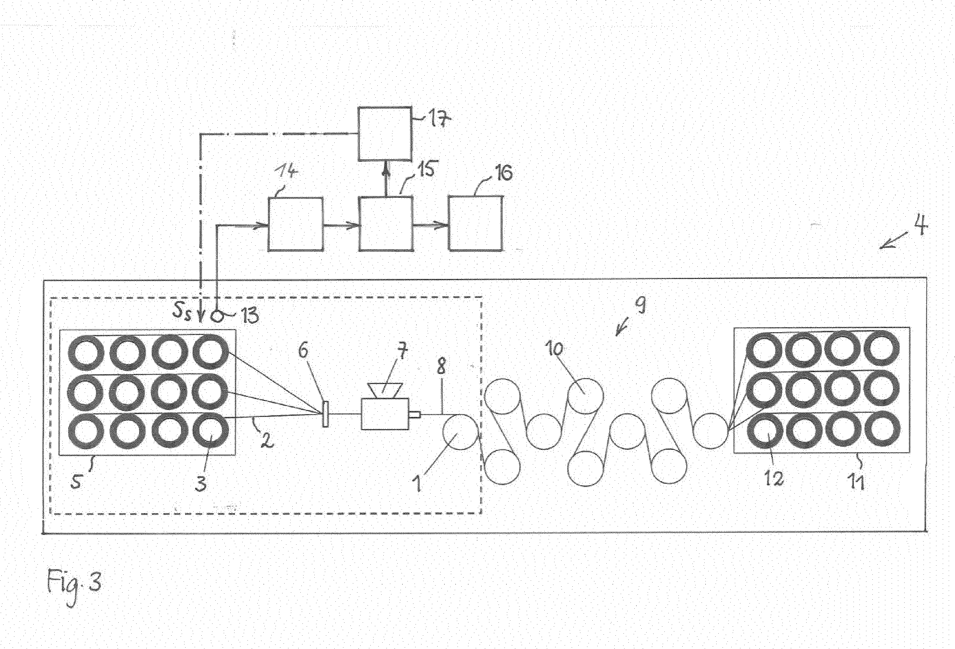

Fig. 3 zeigt in einer schematischen Längsschnittdarstellung eine Anlage 4 zur Herstellung einer Spulbandage, wobei für Komponenten, die den in Fig. 1 schematisch gezeigten Teilen entsprechen, die gleichen Bezugsziffern wie in Fig. 1 verwendet werden.

Die Anlage 4 umfasst eine Einzelfadenspulen-Baugruppe 5, in der mehrere Gruppen von aktiv gebremsten Einzelfadenspulen 3 drehbar gehaltert sind. Von den Einzelfadenspulen 3 werden jeweils Einzelfäden 2 durch eine angetriebene Trommel 1 abgezogen, und zwar zunächst in eine Fadenführung 6, in der die Einzelfäden jeder Gruppe mit vorbestimmtem Abstand parallel zueinander ausgerichtet werden.

Stromabwärts der Fadenführung 6 ist ein Extruder 7 angeordnet, der eine (nicht gezeigte) Mehrzahl von Extruderkanälen umfasst, in denen jeweils eine Gruppe von Einzelfäden gemeinsam mit einer aufextrudierten Gummierung versehen wird, wodurch jeweils eine Spulbandage 8 entsteht. Die Spulbandagen durchlaufen dann eine Kühlstufe 9 mit einer Mehrzahl von wassergekühlten Kühltrommeln 10 und werden schließlich, im abgekühlten Zustand, in einer Aufwickelstation 11 jeweils auf eine Vorratsspule 12 aufgewickelt.

Mittels eines hier nur schematisch dargestellten Drehzahlfühlers 13 wird kontinuierlich die Drehzahl jeder Einzelfadenspule 3 erfasst und einer Vorverarbeitungseinheit 14 (mit einer entsprechenden Anzahl von Verarbeitungskanälen) zugeführt. In dieser wird die Kurve der Zeitabhängigkeit der Drehzahl jeder Einzelfadenspule synthetisiert sowie (wie in Fig. 2 skizziert) geglättet bzw. der laufenden Bildung eines Mittelwertes unterzogen und/oder mit einem "Toleranzbereich" zwischen einem (jeweils momentanen) unteren Grenzwert fₘᵢₙ und oberem Grenzwert fₘₐₓ versehen. Speziell der untere Grenzwert fₘᵢₙ dient im Kontext der Erfindung als Schwellwert für die weitere Verarbeitung.

Der Vorverarbeitungseinheit 14 nachgeschaltet ist eine Auswertungseinheit 15, in der der geglättete bzw. gemittelte Zeitverlauf der Frequenzkurve daraufhin untersucht wird, ob eine Gradienten-Umkehr und/oder ein Verlassen des Toleranzbereiches (nach unten) stattfindet, und mindestens eines dieser Ereignisse wird als Anzeichen einer unzulässigen Dehnung des Textilfadens gewertet.

Der Auswertungsstufe 15 nachgeschaltet sind einerseits eine Alarmierungsstufe 16 zur Ausgabe eines akustischen und/oder optischen Alarmsignals bzw. einer entsprechenden Bildschirmanzeige für einen Bediener und andererseits eine Steuersignal-Erzeugungsstufe 17 zur Erzeugung eines vorbestimmten Steuersignals Sₛ zum Eingriff in den Bremsvorgang der entsprechenden Einzelfadenspule 3, bei der die Fadendehnung und damit der zu befürchtende Fadenbruch festgestellt wurde. Dieser Steuerungseingriff kann speziell in einer Reduzierung des Bremsmomentes und/oder der Transportgeschwindigkeit bestehen.

Die Ausführung der Erfindung ist nicht auf das oben beschriebene Beispiel und die oben erläuterten Aspekte beschränkt, sondern ebenso in einer Vielzahl von Abwandlungen möglich, die im Schutzbereich der anhängenden Ansprüche liegen.

### Bezugszeichenliste

- 1: angetriebene Trommel
- 2: Textilfaden
- 3: Vorratsspule (Einzelfadenspule)
- 4: Herstellungsanlage
- 5: Einzelfadenspulen-Baugruppe
- 6: Fadenführung
- 7: Extruder
- 8: Spulbandage
- 9: Kühlstufe
- 10: Kühltrommel
- 11: Aufwickelstation
- 12: Vorratsspule
- 13: Drehzahlfühler
- 14: Vorverarbeitungseinheit
- 15: Auswertungseinheit
- 16: Alarmierungsstufe
- 17: Steuersignal-Erzeugungsstufe
- v₁: Umfangsgeschwindigkeit der angetriebenen Trommel
- v₂: Umfangsgeschwindigkeit der Vorratsspule
- f(t): Zeitabhängigkeit der Drehzahl
- f_{g}(t): geglättete Zeitabhängigkeit
- fₘᵢₙ: untere Drehzahl-Toleranzgrenze
- fₘₐₓ: obere Drehzahl-Toleranzgrenze
- P1: Punkt der Gradienten-Umkehr
- P2: Punkt des Verlassens des Toleranzbereiches
- t1: Zeitpunkt der Gradienten-Umkehr
- t2: Zeitpunkt des Verlassens des Toleranzbereiches

## Patentansprüche

1. Verfahren zur Herstellung einer Spulbandage eines Fahrzeugreifens, bei dem eine Gruppe von Einzelfäden gemeinsam jeweils von einer gebremsten Einzelfadenspule in eine Fadenführung, in der die Einzelfäden mit vorbestimmtem Abstand parallel ausgerichtet werden, und in einen Extrusionskanal eines Extruders abgewickelt und in diesem gemeinsam mit einer Gummierung versehen wird,
**dadurch gekennzeichnet dass**
die Drehzahl oder Umfangsgeschwindigkeit jeder Einzelfadenspule im Wesentlichen kontinuierlich zeitlich erfasst und einer Auswertung unterzogen wird, die insbesondere eine Schwellwertdiskriminierung mit einem vorbestimmten Schwellwert und/oder eine Schwingungsanalyse der Kurve der Zeitabhängigkeit umfasst, und aus dem Auswertungsergebnis eine Information über eine Dehnung oder Verklemmung eines Einzelfadens und/oder eine Störung am Extruder und eine Warnung vor einem bevorstehenden Bruch eines Einzelfadens abgeleitet wird.

2. Verfahren nach Anspruch 1, wobei die Kurve der Zeitabhängigkeit der Drehzahl oder Umfangsgeschwindigkeit einer Glättung unterzogen und eine geglättete Zeitverlaufs-Kurve gebildet und eine oberhalb eines vorbestimmten Abweichungs-Schwellenwertes liegende Abweichung von der geglätteten Zeitverlaufs-Kurve als die Information über eine Dehnung oder Verklemmung des von der betroffenen Einzelfadenspule abgewickelten Einzelfadens gewertet wird.

3. Verfahren nach Anspruch 1, wobei die einen positiven Anstiegs-Gradienten aufweisende Kurve der Zeitabhängigkeit der Drehzahl einer Glättung unterzogen und eine über einem vorbestimmten Schwellwert liegende Veränderung des Anstiegs-Gradienten, insbesondere Vorzeichenumkehr des Anstiegs-Gradienten, als Information über die Dehnung oder Verklemmung des von der betroffenen Einzelfadenspule abgewickelten Einzelfadens gewertet wird.

4. Verfahren nach Anspruch 1, wobei die Zeitabhängigkeiten der Drehzahl oder Umfangsgeschwindigkeit aller Einzelfadenspulen der Gruppe im Wesentlichen kontinuierlich miteinander verglichen und das Auftreten einer einen vorbestimmten Schwellwert übersteigenden Abweichung des Zeitverlaufes bei einer Einzelfadenspule gegenüber anderen als Information über eine Dehnung oder Verklemmung des von dieser abgewickelten Einzelfadens gewertet wird.

5. Verfahren nach Anspruch 1, wobei eine Mehrzahl von Gruppen von Einzelfäden, insbesondere über ein und dieselbe angetriebene Trommel, jeweils in einen Extruderkanal des Extruders abgewickelt wird und die Zeitabhängigkeiten der Drehzahl oder Umfangsgeschwindigkeit der Einzelfadenspulen gruppenweise miteinander verglichen und das Auftreten einer einen vorbestimmten Schwellwert übersteigenden Abweichung bei sämtlichen Einzelfadenspulen einer Gruppe gegenüber den Einzelfadenspulen der anderen Gruppen als Information über eine Abweichung, insbesondere Verstopfung, im Extruderkanal gewertet wird, in den die Einzelfäden der betreffenden Gruppe einlaufen.

6. Verfahren nach einem der vorangehenden Ansprüche, wobei bei Vorliegen der Information über eine Dehnung oder Verklemmung oder Störung am Extruder ein akustisches und/oder optisches, insbesondere der betroffenen Einzelfadenspule oder dem betroffenen Extruderkanal zugeordnetes, Warnsignal erzeugt wird.

7. Verfahren nach einem der vorangehenden Ansprüche, wobei bei Vorliegen der Information über eine Dehnung ein Steuersignal zum Eingriff in die Fadenabwicklung, insbesondere zur Verringerung des auf die betroffene Einzelfadenspule ausgeübten Bremsmomentes und/oder der Transportgeschwindigkeit, erzeugt wird.

8. Vorrichtung zur Durchführung des Verfahrens nach einem der vorangehenden Ansprüche, aufweisend:
- mindestens eine Gruppe von Einzelfadenspulen, von denen jede einen Textil-Einzelfaden gespeichert hält und denen jeweils eine Bremseinrichtung zugeordnet ist,
- eine Fadenführung zur Parallel-Ausrichtung der Einzelfäden der Gruppe in vorbestimmtem Abstand zueinander,
- einen stromabwärts der Fadenführung angeordneten Extruder mit mindestens einem Extruderkanal, in den die Einzelfäden der Gruppe einlaufen und in dem sie gemeinsam gummiert werden, und
- eine angetriebene Trommel zum Abwickeln der Einzelfäden von den Einzelfadenspulen durch die Fadenführung und den zugeordneten Kanal des Extruders,
**dadurch gekennzeichnet dass**
- jeder Einzelfadenspule eine Erfassungseinrichtung zur im Wesentlichen kontinuierlichen zeitlichen Erfassung der Drehzahl oder Umfangsgeschwindigkeit zugeordnet ist,
- eine Vorverarbeitungseinrichtung zur Vorverarbeitung der Ausgangsdaten der Erfassungseinrichtungen und zur Synthese einer Kurve der Zeitabhängigkeit der Drehzahl oder Umfangsgeschwindigkeit und, der Vorverarbeitungseinrichtung nachgeordnet,
- eine Auswertungseinrichtung zur Auswertung der Kurve der Zeitabhängigkeit für jede Einzelfadenspule zur Gewinnung der Information über eine Dehnung oder Verklemmung oder Störung am Extruder vorgesehen ist.

9. Vorrichtung nach Anspruch 8, wobei die Auswertungseinrichtung einen Schwellwertspeicher zur Speicherung eines bei der Auswertung der Kurve der Zeitabhängigkeit zu Grunde zu legenden Schwellwertes aufweist.

10. Vorrichtung nach Anspruch 9, wobei die Auswertungseinrichtung eine Glättungseinrichtung zur Glättung der Kurve der Zeitabhängigkeit nach einem vorgespeicherten Glättungsalgorithmus und/oder eine Mittelungseinrichtung zur Ableitung einer laufend gemittelten Zeitverlaufs-Kurve aufweist.

11. Vorrichtung nach Anspruch 10, wobei die Auswertungseinrichtung zur Schwellwertdiskriminierung der geglätteten Kurve der Zeitabhängigkeit oder der Mittelwert-Kurve anhand des vorbestimmten Schwellwertes dahingehend ausgeführt ist, dass bei einer den Schwellwert überschreitenden Abweichung in der geglätteten Zeitverlaufs-Kurve oder Mittelwert-Kurve ein die Dehnung oder Verklemmung anzeigendes Signal ausgegeben wird.

12. Vorrichtung nach Anspruch 10, wobei den den Einzelfadenspulen der Gruppe zugeordneten Erfassungseinrichtungen und Vorverarbeitungseinrichtungen und jeweils nachgeordneten Glättungs- bzw. Mittelungseinrichtungen der Auswertungseinrichtung eine gemeinsame Vergleichereinheit nachgeschaltet ist, die eingangsseitig mit dem Schwellwertspeicher verbunden und zu einem Vergleich aller geglätteten Zeitabhängigkeiten oder Mittelwert-Kurven der Einzelfadenspulen und zur Diskriminierung des Vergleichsergebnisses mit dem Schwellenwert und zur Ausgabe eines eine Dehnung oder Verklemmung eines Einzelfadens kennzeichnenden Signals ausgebildet ist, wenn beim Vergleich eine den Schwellwert übersteigende Abweichung bei einer Einzelfadenspule auftritt.

13. Vorrichtung nach Anspruch 10, wobei die Vorrichtung eine Mehrzahl von Gruppen von Einzelfadenspulen mit jeweils zugeordneter Erfassungseinrichtung und Vorverarbeitungseinrichtung umfasst und die Auswertungseinrichtung eine der Mehrzahl von Gruppen entsprechende Mehrzahl von Kanälen aufweist, in denen jeweils eine Glättungseinrichtung oder Mittelungseinrichtung vorgesehen ist, und wobei der Mehrzahl von Kanälen eine Vergleichereinrichtung zugeordnet ist, welche eingangsseitig mit dem Schwellwertspeicher verbunden und dazu ausgebildet ist, die geglätteten Zeitverlaufs-Kurven oder Mittelwert-Kurven der Einzelfadenspulen gruppenweise miteinander zu vergleichen und bei einer den Schwellwert übersteigenden Abweichung zwischen den Zeitverläufen einzelner Gruppen ein eine Verstopfung eines Extruderkanals anzeigendes Signal auszugeben.

14. Vorrichtung nach einem der Ansprüche 1-13, wobei der Auswertungseinrichtung eine Alarmausgabeeinrichtung zur Ausgabe eines akustischen und/oder optischen Warnsignals, insbesondere in Zuordnung zu einer betroffenen Einzelfadenspule oder einem Extruderkanal, nachgeschaltet ist.

15. Vorrichtung nach einem der Ansprüche 7-13, wobei der Auswertungseinrichtung eine Steuersignal-Erzeugungseinrichtung zur Erzeugung eines Steuersignals zum Eingriff in den Abwicklungsvorgang, insbesondere zur Zuführung zu einer Bremseinrichtung einer Einzelfadenspule, nachgeordnet ist.

## Claims

1. Method for producing a wound bandage of a vehicle tyre in which a group of individual filaments are in each case unwound together from a braked individual filament spool into a filament guide, in which the individual filaments are aligned in parallel with a predetermined spacing, and into an extrusion channel of an extruder and in the latter are together provided with a rubber coating,
**characterized in that**
the rotational speed or circumferential speed of each individual filament spool is recorded substantially continuously over time and is subjected to an evaluation, which comprises in particular a threshold-value discrimination with a predetermined threshold value and/or an analysis of the oscillation of the time-dependency curve, and the evaluation result is used to deduce information concerning stretching or jamming of an individual filament and/or a problem at the extruder and a warning of imminent breakage of an individual filament.

2. Method according to Claim 1, wherein the time-dependency curve for the rotational speed or circumferential speed is subjected to a smoothing and a smoothed time-profile curve is formed and a deviation of the smoothed time-profile curve that lies above a predetermined deviation threshold value is assessed as the information concerning stretching or jamming of the individual filament unwound from the individual filament spool concerned.

3. Method according to Claim 1, wherein the time-dependency curve for the rotational speed that has a positive rising gradient is subjected to a smoothing and a change in the rising gradient that lies above a predetermined threshold value, in particular a reversal of the sign of the rising gradient, is assessed as information concerning stretching or jamming of the individual filament unwound from the individual filament spool concerned.

4. Method according to Claim 1, wherein the time dependencies of the rotational speed or circumferential speed of all the individual filament spools of the group are compared substantially continuously with one another and the occurrence of a deviation of the time profile in the case of one individual filament spool as compared with others that lies above a predetermined threshold value is assessed as information concerning stretching or jamming of the individual filament unwound from this one spool.

5. Method according to Claim 1, wherein a plurality of groups of individual filaments are unwound, in particular via one and the same driven drum, in each case into an extruder channel of the extruder and the time dependencies of the rotational speed or circumferential speed of the individual filament spools are compared to one another in groups and the occurrence of a deviation in the case of all the individual filament spools of one group as compared with the individual filament spools of the other groups that exceeds a predetermined threshold value is assessed as information concerning a deviation, in particular blockage, in the extruder channel into which the individual filaments of the group concerned run.

6. Method according to one of the preceding claims, wherein, when the information concerning stretching or jamming or a problem at the extruder is available, an acoustic and/or optical warning signal is generated, in particular a warning signal assigned to the individual filament spool concerned or to the extruder channel concerned.

7. Method according to one of the preceding claims, wherein, when information concerning stretching is available, a control signal is generated for intervention in the filament unwinding, in particular for reducing the braking moment exerted on the individual filament spool concerned and/or for reducing the transporting speed.

8. Apparatus for carrying out the method according to one of the preceding claims, having:
- at least one group of individual filament spools, each of which keeps an individual textile filament stored and to which a braking device is respectively assigned,
- a filament guide for aligning the individual filaments of the group in parallel with a predetermined spacing in relation to one another,
- an extruder, arranged downstream of the filament guide, with at least one extruder channel, into which the individual filaments of the group run and in which they are together provided with a rubber coating, and
- a driven drum for unwinding the individual filaments from the individual filament spools through the filament guide and the assigned channel of the extruder,
**characterized in that**
- each individual filament spool is assigned a recording device for recording the rotational speed or circumferential speed substantially continuously over time,
- a preprocessing device is provided for preprocessing the output data of the recording devices and for synthesizing a time-dependency curve for the rotational speed or circumferential speed and, arranged downstream of the preprocessing device,
- an evaluation device is provided for evaluating the time-dependency curve for each individual filament spool to obtain the information concerning stretching or jamming or a problem at the extruder.

9. Apparatus according to Claim 8, wherein the evaluation device has a threshold-value memory for storing a threshold value to be taken as a basis in the evaluation of the time-dependency curve.

10. Apparatus according to Claim 9, wherein the evaluation device has a smoothing device for smoothing the time-dependency curve in accordance with a pre-stored smoothing algorithm and/or an averaging device for deriving a continuously averaged time-profile curve.

11. Apparatus according to Claim 10, wherein the evaluation device is configured for threshold-value discrimination of the smoothed time-dependency curve or of the average-value curve on the basis of the predetermined threshold value with the aim that, when there is a deviation in the smoothed time-profile curve or average-value curve that exceeds the threshold value, a signal indicating the stretching or jamming is output.

12. Apparatus according to Claim 10, wherein a shared comparator unit is arranged downstream of the recording devices and preprocessing devices assigned to the individual filament spools of the group and of the respectively downstream smoothing and averaging devices of the evaluation device, which comparator unit is connected on the input side to the threshold-value memory and is designed for a comparison of all the smoothed time dependencies or average-value curves of the individual filament spools and for the discrimination of the comparison result with the threshold value and for the output of a signal characterizing stretching or jamming of an individual filament if in the comparison a deviation that exceeds the threshold value occurs in the case of an individual filament spool.

13. Apparatus according to Claim 10, wherein the apparatus comprises a plurality of groups of individual filament spools with a respectively assigned recording device and preprocessing device and the evaluation device has a plurality of channels corresponding to the plurality of groups, in each of which channels a smoothing device or an averaging device is provided, and wherein the plurality of channels is assigned a comparator device, which is connected on the input side to the threshold-value memory and is designed to compare the smoothed time-profile curves or average-value curves of the individual filament spools with one another in groups and, in the case of a deviation between the time profiles of individual groups that exceeds the threshold value, to output a signal indicating a blockage of an extruder channel.

14. Apparatus according to one of Claims 1-13, wherein an alarm-output device is arranged downstream of the evaluation device for outputting an acoustic and/or optical warning signal, in particular in assignment to an individual filament spool concerned or an extruder channel.

15. Apparatus according to one of Claims 7-13, wherein a control-signal generating device is arranged downstream of the evaluation device for generating a control signal for intervention in the unwinding operation, in particular for feeding to a braking device of an individual filament spool.

## Revendications

1. Procédé de fabrication d'une nappe ceinture d'un pneu de véhicule, avec lequel un groupe de fils individuels est déroulé en commun respectivement depuis une bobine de fil individuel freinée dans un guide-fil, dans lequel les fils individuels sont alignés en parallèle à une distance prédéterminée, et dans un canal d'extrusion d'une extrudeuse et, dans celle-ci, est pourvu en commun d'un caoutchoutage,
**caractérisé en ce que**
la vitesse de rotation ou la vitesse périphérique de chaque bobine de fil individuel est acquise sensiblement en continu dans le temps et soumise à une évaluation, qui comprend notamment une discrimination de valeur de seuil avec une valeur de seuil prédéterminée et/ou une analyse d'oscillation de la courbe de la dépendance au temps, et une information à propos d'un allongement ou d'un coincement d'un fil individuel et/ou d'un dysfonctionnement au niveau de l'extrudeuse et d'un avertissement avant une rupture imminente d'un fil individuel est déduite du résultat de l'évaluation.

2. Procédé selon la revendication 1, la courbe de la dépendance au temps de la vitesse de rotation ou de la vitesse périphérique étant soumise à un lissage et une courbe d'évolution dans le temps lissée étant formée et un écart par rapport à la courbe d'évolution dans le temps lissée, qui se situe au-dessus d'une valeur de seuil d'écart prédéterminée, étant évalué comme l'information à propos d'un allongement ou d'un coincement du fil individuel déroulé depuis la bobine de fil individuel concernée.

3. Procédé selon la revendication 1, la courbe de la dépendance au temps de la vitesse de rotation, qui présente un gradient de montée positif, étant soumise à un lissage et une variation du gradient de montée supérieure à une valeur de seuil prédéterminée, notamment une inversion de signe du gradient de montée, étant évaluée comme une information à propos de l'allongement ou du coincement du fil individuel déroulé depuis la bobine de fil individuel concernée.

4. Procédé selon la revendication 1, les dépendances au temps de la vitesse de rotation ou de la vitesse périphérique de toutes les bobines de fil individuel du groupe étant comparées les unes aux autres sensiblement en continu et l'apparition d'un écart de l'évolution dans le temps qui dépasse une valeur de seuil prédéterminée pour une bobine de fil individuel par rapport aux autres étant évaluée comme une information à propos d'un allongement ou d'un coincement du fil individuel déroulé depuis cette bobine.

5. Procédé selon la revendication 1, une pluralité de groupes de fils individuels étant respectivement déroulés dans un canal d'extrudeuse de l'extrudeuse, notamment par le biais d'un seul et même tambour entraîné, et les dépendances au temps de la vitesse de rotation ou de la vitesse périphérique des bobines de fil individuel étant comparées entre elles par groupe et l'apparition d'un écart qui dépasse une valeur de seuil prédéterminée pour toutes les bobines de fil individuel d'un groupe par rapport aux bobines de fil individuel des autres groupes étant évaluée comme une information à propos d'un écart, notamment d'une obstruction, dans le canal d'extrudeuse dans lequel pénètrent les fils individuels du groupe concerné.

6. Procédé selon l'une des revendications précédentes, un signal d'avertissement sonore et/ou visuel, notamment associé à la bobine de fil individuel concernée ou au canal d'extrudeuse concerné, étant généré en présence de l'information à propos d'un allongement ou d'un coincement ou d'un dysfonctionnement au niveau de l'extrudeuse.

7. Procédé selon l'une des revendications précédentes, un signal de commande étant généré, en présence de l'information à propos d'un allongement, pour intervenir dans le déroulement du fil, notamment en vue de réduire le couple de freinage exercé sur la bobine de fil individuel concernée et/ou la vitesse de transport.

8. Arrangement pour mettre en oeuvre le procédé selon l'une des revendications précédentes, possédant :
- au moins un groupe de bobines de fil individuel, dont chacune maintient stocké un fil individuel textile et auxquelles est respectivement associé un dispositif de freinage,
- un guide-fil destiné à l'alignement en parallèle des fils individuels du groupe à une distance prédéterminée les uns des autres,
- une extrudeuse disposée en aval du guide-fil et comprenant au moins un canal d'extrusion dans lequel pénètrent les fils individuels du groupe et dans lequel ils sont caoutchoutés ensemble, et
- un tambour entraîné destiné à dérouler les fils individuels depuis les bobines de fil individuel à travers le guide-fil et le canal associé de l'extrudeuse, **caractérisé en ce que**
- un dispositif d'acquisition destiné à l'acquisition sensiblement en continu dans le temps de la vitesse de rotation ou de la vitesse périphérique est associé à chaque bobine de fil individuel,
- un dispositif de prétraitement destiné à prétraiter les données de sortie des dispositifs d'acquisition et synthétiser une courbe de la dépendance au temps de la vitesse de rotation ou de la vitesse périphérique et, disposé en aval du dispositif de prétraitement,
- un dispositif d'évaluation destiné à évaluer la courbe de la dépendance au temps pour chaque bobine de fil individuel afin d'obtenir l'information à propos d'un allongement ou d'un coincement ou d'un dysfonctionnement au niveau de l'extrudeuse étant présents.

9. Arrangement selon la revendication 8, le dispositif d'évaluation possédant une mémoire de valeur de seuil destinée à mémoriser une valeur de seuil à prendre pour base lors de l'évaluation de la courbe de la dépendance au temps.

10. Arrangement selon la revendication 9, le dispositif d'évaluation possédant un dispositif de lissage destiné à lisser la courbe de la dépendance au temps selon un algorithme de lissage préenregistré et/ou un dispositif de calcul de la moyenne afin de dériver une courbe d'évolution dans le temps moyennée en continu.

11. Arrangement selon la revendication 10, le dispositif d'évaluation, en vue de la discrimination de la valeur de seuil de la courbe de la dépendance au temps lissée ou de la courbe de valeur moyenne à l'aide de la valeur de seuil prédéterminée, étant réalisé de telle sorte qu'un signal qui indique l'allongement ou le coincement est délivré dans le cas d'un écart qui dépasse la valeur de seuil dans la courbe de la dépendance au temps lissée ou dans la courbe de valeur moyenne.

12. Arrangement selon la revendication 10, une unité comparateur commune étant montés en aval des dispositifs d'acquisition et des dispositifs de prétraitement qui sont associés aux bobines de fil individuel du groupe ainsi que des dispositifs de lissage ou de calcul de la moyenne du dispositif d'évaluation, respectivement disposés en aval, laquelle est reliée côté entrée à la mémoire de valeur de seuil et est configurée pour une comparaison de toutes les courbes de dépendance au temps lissées ou courbes de valeur moyenne des bobines de fil individuel et pour la discrimination du résultat de la comparaison avec la valeur de seuil et pour délivrer un signal qui caractérise un allongement ou un coincement d'un fil individuel lorsque, lors de la comparaison, il se produit un écart qui dépasse la valeur de seuil pour une bobine de fil individuel.

13. Arrangement selon la revendication 10, l'arrangement comportant une pluralité de groupes de bobines de fil individuel comprenant respectivement un dispositif de détection et un dispositif de prétraitement associés et le dispositif d'évaluation possédant une pluralité de canaux correspondant à la pluralité de groupes, dans lesquels est respectivement prévu un dispositif de lissage ou un dispositif de calcul de la moyenne, et un dispositif comparateur étant associé à la pluralité de canaux, lequel est relié côté entrée à la mémoire de valeur de seuil et est configuré pour comparer entre elles, groupe par groupe, les courbes d'évolution dans le temps lissées ou les courbes de valeur moyenne des bobines de fil individuel et, dans le cas d'un écart qui dépasse la valeur de seuil entre les courbes d'évolution dans le temps des différents groupes, délivrer un signal qui indique une obstruction d'un canal d'extrudeuse.

14. Arrangement selon l'une des revendications 1 à 13, un dispositif d'émission d'alarme destiné à délivrer un signal d'avertissement sonore et/ou visuel, notamment en association avec une bobine de fil individuel concernée ou un canal d'extrudeuse, étant monté en aval du dispositif d'évaluation.

15. Arrangement selon l'une des revendications 7 à 13, un dispositif de génération de signal de commande destiné à générer un signal de commande pour intervenir dans le processus de déroulement, notamment pour l'amener à un dispositif de freinage d'une bobine de fil individuel, étant monté en aval du dispositif d'évaluation.
